(19) Europäisches Patentamt / European Patent Office / Office européen des brevets

(11) **EP 4 625 535 A1**

(12) **EUROPEAN PATENT APPLICATION**
published in accordance with Art. 153(4) EPC

(43) Date of publication:
**01.10.2025   Bulletin 2025/40**

(21) Application number: **24849696.0**

(22) Date of filing: **01.08.2024**

(51) International Patent Classification (IPC):
$H01M\ 4/36^{(2006.01)}$   $H01M\ 4/38^{(2006.01)}$
$H01M\ 4/48^{(2010.01)}$   $H01M\ 4/587^{(2010.01)}$
$H01M\ 4/133^{(2010.01)}$   $H01M\ 4/131^{(2010.01)}$
$H01M\ 4/134^{(2010.01)}$   $H01M\ 4/62^{(2006.01)}$
$H01M\ 4/66^{(2006.01)}$

(52) Cooperative Patent Classification (CPC):
H01M 4/02; H01M 4/131; H01M 4/133;
H01M 4/134; H01M 4/36; H01M 4/38; H01M 4/48;
H01M 4/587; H01M 4/62; H01M 4/66;
H01M 10/052; Y02E 60/10

(86) International application number:
**PCT/KR2024/095979**

(87) International publication number:
**WO 2025/029129 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:   **02.08.2023   KR 20230100955**

(71) Applicant: **LG Energy Solution, Ltd.**
**Seoul 07335 (KR)**

(72) Inventors:
• **LEE, Seunggwan**
  **Seoul 34122 (KR)**
• **KIM, Taeho**
  **Daejeon 34122 (KR)**
• **PARK, Heeyeon**
  **Daejeon 34122 (KR)**
• **SHIN, Sun Young**
  **Daejeon 34122 (KR)**
• **LEE, Yong Ju**
  **Daejeon 34122 (KR)**

(74) Representative: **Hoffmann Eitle**
**Patent- und Rechtsanwälte PartmbB**
**Arabellastraße 30**
**81925 München (DE)**

(54) **NEGATIVE ELECTRODE COMPOSITION, NEGATIVE ELECTRODE, AND LITHIUM SECONDARY BATTERY**

(57)    The present invention relates to a negative electrode composition and a negative electrode, a lithium secondary battery, a battery module, and a battery pack comprising same, the composition comprising a negative electrode active material comprising a silicon-based active material and a carbon-based active material, wherein the amount of silicon-based active material is greater than 0 parts by weight and less than or equal to 10 parts by weight based on 100 parts by weight of the total negative electrode active material, the carbon-based active material comprises natural graphite and has a total amount of N and O of at least 200 ppm to 2000 ppm based on 0.01 g of the natural graphite, and the silicon-based active material comprises at least one of a silicon-carbon composite and a silicon oxide, has a total amount of N and O of 0.7% to 3.3% based on 0.01 g of the silicon-carbon composite, and has a total amount of N and O of 30% to 32% based on 0.01 g of the silicon oxide.

## Description

[Technical Field]

The present application claims priority to and the benefit of Korean Patent Application No. 10-2023-0100955 filed in the Korean Intellectual Property Office on August 02, 2023, the entire contents of which are incorporated herein by reference.

The present application relates to a negative electrode composition, a negative electrode, and a lithium secondary battery.

[Background Art]

Recently, with the rapid spread of electronic devices using batteries, such as mobile phones, laptop computers, electric vehicles, electrically-powered tools and cleaners, the demand for small, lightweight, and relatively high-capacity and/or high-output secondary batteries is rapidly increasing. In particular, a lithium secondary battery is in the limelight as a driving power source for electronic devices because it is lightweight and has a high energy density. Accordingly, research and development efforts to improve the performance of the lithium secondary battery are being actively conducted.

In general, a lithium secondary battery includes a positive electrode, a negative electrode, a separator interposed between the positive electrode and the negative electrode, an electrolyte, an organic solvent, and the like. In addition, the positive electrode and the negative electrode may be formed on current collectors with active material layers each including a positive electrode active material and a negative electrode active material. In general, for the positive electrode, a lithium-containing metal oxide such as $LiCoO_2$ and $LiMn_2O_4$ is used as the positive electrode active material, and for the negative electrode, a carbon-based active material or a silicon-based active material that does not contain lithium is used as the negative electrode active material.

Batteries using graphite as a negative electrode active material can exhibit a high discharge voltage of **3.6 V,** but there is a limit to increasing an energy density due to low capacity.

On the other hand, among negative electrode active materials, silicon-based active materials have a problem of detaching from the negative electrode current collector due to a higher degree of expansion and contraction during charging and discharging compared to graphite.

Accordingly, there is a need to develop a negative electrode material that can address the above-described problems.

[Detailed Description of the Invention]

[Technical Problem]

The present invention is intended to provide a negative electrode composition that can provide improved adhesion between a negative electrode active material layer and a negative electrode current collector in a negative electrode for a lithium secondary battery including graphite and a silicon-based active material including at least one of a silicon oxide and a silicon-carbon composite, and a negative electrode including the negative electrode composition. In addition, the present invention is intended to provide a lithium secondary battery with improved life by including the above-described negative electrode.

[Technical Solution]

An exemplary embodiment of the present invention provides a negative electrode composition for a lithium secondary battery, including: a negative electrode active material including a silicon-based active material and a carbon-based active material, wherein a content of the silicon-based active material is more than 0 part by weight and 10 parts by weight or less based on 100 parts by weight of the total negative electrode active material, the carbon-based active material includes graphite and has a summed amount of N and O of 200 ppm or more and 2000 ppm or less based on 0.01 g of the graphite, the silicon-based active material includes at least one of a silicon-carbon composite and a silicon oxide, has a summed amount of N and O of 0.7% to 3.3% based on 0.01 g of the silicon-carbon composite, and has a summed amount of N and O of 30% to 32% based on 0.01 g of the silicon oxide.

According to an exemplary embodiment of the present invention, the graphite includes at least one of natural graphite and artificial graphite.

An exemplary embodiment of the present invention provides a negative electrode including the negative electrode composition according to the exemplary embodiments described above.

An exemplary embodiment of the present invention provides a lithium secondary battery including the negative electrode according to the above-described exemplary embodiment, a positive electrode, and a separator.

An exemplary embodiment of the present invention provides a battery module including the lithium secondary battery according to the exemplary embodiment described above.

An exemplary embodiment of the present invention provides a battery pack including the lithium secondary battery according to the exemplary embodiment described above.

An exemplary embodiment of the present invention provides a battery pack including the battery module according to the exemplary embodiment described above.

[Advantageous Effects]

According to the exemplary embodiments of the present invention, by mixing and using a silicon-based active material and a carbon-based active material having N and O contents within specific ranges as a negative electrode active material, it is possible not only to secure adhesive force between the active material and the current collector, but also to effectively prevent expansion problems due to electrolyte solution side reactions, thereby improving cycle performance.

[Best Mode]

Hereinafter, the present invention will be described in more detail for better understanding of the present invention. The present invention may be implemented in various different forms, and is not limited to the exemplary embodiments described herein. The terms or words used throughout the specification and the claims should not be construed as being limited to their ordinary or dictionary meanings, but construed as having meanings and concepts consistent with the technical idea of the present invention, based on the principle that an inventor may properly define the concepts of the words or terms to best explain the invention.

It will be further understood that the terms "comprises", "includes" or "have" when used in the present specification specify the presence of stated features, numbers, steps, constitutional elements and/or combinations thereof, but do not preclude the presence or addition of one or more other features, numbers, steps, constitutional elements, and/or combinations thereof.

Further, it will be understood that when an element such as a layer is referred to as being "on" another element, it can be "directly on" the other element or an intervening element may also be present. In contrast, when an element is referred to as being "directly on" another element, there are no intervening elements present. Further, when an element is referred to as being "above" or "on" a reference portion, the element is positioned above or below the reference portion, and it does not necessarily mean that the element is positioned "above" or "on" in a direction opposite to gravity.

It should be understood that the terms or words used throughout the specification should not be construed as being limited to their ordinary or dictionary meanings, but construed as having meanings and concepts consistent with the technical idea of the present invention, based on the principle that an inventor may properly define the concepts of the words or terms to best explain the invention.

As used herein, the singular forms "a", "an" and "the" are intended to include the plural forms as well, unless the context clearly indicates otherwise.

Hereinafter, preferred embodiments of the present invention will be described in detail. However, it should be understood that the exemplary embodiments of the present invention may be modified in various forms and the scope of the present invention is not limited to the exemplary embodiments described below.

A negative electrode composition according to an exemplary embodiment of the present invention includes a negative electrode active material including a silicon-based active material and a carbon-based active material, and a content of the silicon-based active material is 10 parts by weight or less based on 100 parts by weight of the total negative electrode active material. The carbon-based active material includes graphite and has a summed amount of N and O of 200 ppm or more and 2000 ppm or less based on 0.01 g of the graphite. The silicon-based active material includes at least one of a silicon-carbon composite and a silicon oxide, has a summed amount of N and O of 0.7% to 3.3% based on 0.01 g of the silicon-carbon composite, and has a summed amount of N and O of 30% to 32% based on 0.01 g of the silicon oxide.

As described above, a negative electrode including a silicon-based active material including at least one of a silicon oxide and a silicon-carbon composite undergoes greater expansion due to the material properties of the silicon-based active material than a negative electrode using a carbon-based active material such as graphite as 100% of the negative electrode active material, and thus exhibits inferior swelling characteristics and adhesion to a current collector. However, in the present invention, by including the silicon-based active material in an amount of 10 parts by weight or less based on 100 parts by weight of the total negative electrode active material and controlling the summed amount of N and O in the silicon-based active material and the carbon-based active material within the above-described range, the dispersibility in the slurry and the adhesion between the negative electrode active material layer and the negative electrode current collector can be improved. In particular, if a content of oxygen (O) in the silicon-based active material is too low, it has an advantage in capacity due to an increase in the domain size of silicon (Si), but the volume expansion is relatively large, leading to detachment from the current collector or a decrease in the life. In addition, if a content of nitrogen (N) in the silicon-based active material is too high, it may lead to a decrease in the adhesion to the current collector and a decrease in the life due to decreases in the dispersibility and conductivity of the slurry in the same content of aqueous binder and conductive material. However, in an exemplary embodiment of the present invention, by designing the summed amounts of N and O in the silicon-based active material and the graphite to be within the above ranges, the dispersibility in the slurry, the adhesion to the current collector, and the life characteristics can be improved. In the present specification, the content of N and O in each material can be analyzed in a powder state using an ONH analyzer, such as an ONH Analyzer (Bruker, G8 Galileo).

According to an exemplary embodiment, the summed amount of N and O in the silicon oxide is 160 to 1,500 times, for example, 160 to 1,000 times, or 160 to 875 times, the summed amount of N and O in the graphite. This range is advantageous to improve dispersibility in a slurry and adhesion to a current collector, thereby improving the life characteristics of the battery.

According to an exemplary embodiment, the summed amount of N and O in the silicon-carbon composite is 16.5 to 35 times, for example, 16.5 to 25 times or 16.5 to 21 times the summed amount of N and O in the graphite. This range is advantageous to improve dispersibility in a slurry and adhesion to a current collector, thereby improving the life characteristics of the battery.

According to an exemplary embodiment, the natural graphite may have a tap density of 0.9 g/cc or more, and specifically, may have a tap density of 0.9 to 1.2 g/cc. The natural graphite may have a higher degree of sphericity as the tap density increases within the above range, and in this case, the impurity contents of N and O may increase. In the present specification, tap density may be measured using a conventional tap density measuring apparatus, and specifically, may be measured using TAP-2S available from LOGAN Co., Ltd. For example, the tap density may be a density calculated by placing 40 g of a sample in a container and tapping it 1000 times.

In addition, the contents of N and O in the natural graphite can be controlled in a raw material mining process, an acid treatment process for removing impurities, a carbonization process with pitch or the like after a spheroidization process, and the like.

According to an exemplary embodiment, the contents of N and O in the silicon-based active material can be controlled by selecting materials used in the manufacturing process or controlling process conditions. For example, the contents of N and O can be controlled depending on whether an inert atmosphere is maintained in all heat treatment processes included in the manufacturing process and whether an artificial oxidation process is performed before or after the formation of a carbon coating layer on the surface of the active material. As an example, a silicon-based active material may be precipitated in a bulk state on a plate by mixing $Si/SiO_2$ at 1:1 and evaporating the mixture into a gaseous state at 1400°C in one chamber, evaporating Mg into a gaseous state at 750°C in another chamber, and then allowing them to react with each other in a gaseous state and cooling the same. The precipitated bulk-state material is pulverized finely through a milling process to a level of $D_{50} = 5\ \mu m$. Then, a carbon coating layer may be formed by performing a CVD process using the raw material for carbon coating (methane) while flowing an inert gas. In this case, oxygen can be controlled according to a ratio of $SiO_2$ in the raw material in a vacuum state in an evaporation unit and a deposition unit. According to an exemplary embodiment, the silicon-based active material may be included in an amount of more than 0 part by weight and 10 parts by weight or less, for example, 1 to 10 parts by weight, based on a total of 100 parts by weight of the negative electrode active material included in the negative electrode composition.

According to an exemplary embodiment, the carbon-based active material may be included in an amount of 90 parts by weight or more and less than 100 parts by weight, for example, 90 to 99 parts by weight, based on the total of 100 parts by weight of the negative electrode active material included in the negative electrode composition. The carbon-based active material may include at least one of natural graphite and artificial graphite. When the carbon-based active material includes both natural graphite and artificial graphite, a weight ratio of the artificial graphite and natural graphite may be 1:9 to 9:1, for example, 3:7 to 7:3. For example, based on 100 parts by weight of the carbon-based active material, the content of the natural graphite may be 10 to 70 parts by weight, and the content of the artificial graphite may be 30 to 90 parts by weight.

According to an exemplary embodiment, the silicon-based active material may include a silicon-carbon composite, a silicon oxide, or both of them.

According to an exemplary embodiment, the silicon-carbon composite may be a Si/C-based active material.

In the present specification, the silicon-carbon composite is a composite of Si and C, and is distinguished from silicon carbide expressed as SiC. The silicon carbide does not react electrochemically with lithium, so all performance, including life, may be measured as 0.

The silicon-carbon composite may be a composite of silicon, graphite, etc., and may form a structure in which a core resulting from compositing of silicon, graphite, etc. is surrounded by graphene, amorphous carbon or the like. In the silicon-carbon composite, silicon may be nano silicon.

According to an exemplary embodiment, the silicon-carbon composite includes porous carbon-based particles and a silicon coating layer located on surfaces or in internal pores of the porous carbon-based particles. The silicon coating layer may be formed by depositing silicon on the porous carbon-based particles using silane gas. If necessary, a carbon layer may be further formed on a surface of the silicon-carbon composite. For this carbon layer, the description of a method for forming a carbon layer on a silicon oxide described below may be applied. According to an exemplary embodiment, the silicon-carbon composite may have a specific surface area of 0.5 to 10 $m^2$/g as measured by a BET method, a pore volume of 0.005 to 0.03 $cm^3$/g, and a pore size of 10 to 20 nm as measured by the BET method. The silicon-carbon composite may have a pore volume of 0.005 to 0.03 $cm^3$/g as measured by a mercury penetration method (Hg porosimeter).

According to an exemplary embodiment, the silicon-carbon composite may have a $D_{90}$ particle diameter of 5 to 15 $\mu$m, a $D_{50}$ particle diameter of 1 to 10 $\mu$m, a $D_{min}$ of 1 to 3 $\mu$m, and a $D_{max}$ of 17 to 23 $\mu$m.

According to an exemplary embodiment, the silicon oxide may include $SiO_x$ ($0 \leq x < 2$).

The active material including $SiO_x$ ($0 \leq x < 2$) may be a silicon oxide particle including $SiO_x$ ($0 < x < 2$) and a pore.

The $SiO_x$ ($0 < x < 2$) corresponds to a matrix in the silicon oxide particle. The $SiO_x$ ($0 < x < 2$) may be a form of including Si and $SiO_2$, and the Si may form a phase. That is, x corresponds to a ratio of the number of O to Si included in the $SiO_x$ ($0 < x < 2$). When the silicon oxide particles include the $SiO_x$ ($0 < x < 2$), a discharge capacity of a secondary battery can be improved.

The silicon oxide particle may further include at least one of a Mg compound and a Li compound. The Mg compound and the Li compound may correspond to a dopant in the silicon oxide particle.

The Mg compound and/or the Li compound may be present inside the $SiO_x$ ($0 < x < 2$) and/or on a surface of the $SiO_x$ ($0 < x < 2$). The initial efficiency of the battery can be improved by the Mg compound and/or the Li compound.

The Mg compound may include at least one selected from the group consisting of Mg silicate, Mg silicide, and Mg oxide. The Mg silicate may include at least one of $Mg_2SiO_4$ and $MgSiO_3$. The Mg silicide may include $Mg_2Si$. The Mg oxide may include MgO.

In an exemplary embodiment of the present specification, the Mg element may be included in an amount of 0.1 to 9 wt% based on 100 wt% of the total silicon oxide particles. When the above range is satisfied, the Mg compound can be included in an appropriate content in the silicon oxide particles, affecting the irreversible capacity of the silicon oxide, thereby easily suppressing the volume changes of the silicon oxide particles during charging and discharging of the battery and improving the discharge capacity and initial efficiency of the battery. The Li compound may include at least one selected from the group consisting of Li silicate, Li silicide, and Li oxide. The Li silicate may include at least one of $Li_2SiO_3$, $Li_4SiO_4$ and $Li_2Si_2O_5$. The Li silicide may include $Li_7Si_2$. The Li oxide may include $Li_2O$.

In an exemplary embodiment of the present invention, the Li compound may include a form of lithium silicate. The lithium silicate is represented by $Li_aSi_bO_c$ ($2 \leq a \leq 4$, $0 < b \leq 2$, $2 \leq c \leq 5$) and may be divided into crystalline lithium silicate and amorphous lithium silicate. The crystalline lithium silicate may be present in the silicon oxide particle in a form of at least one lithium silicate selected from the group consisting of $Li_2SiO_3$, $Li_4SiO_4$, and $Li_2Si_2O_5$, and the amorphous lithium silicate may be in a form of $Li_aSi_bO_c$ ($2 \leq a \leq 4$, $0 < b \leq 2$, $2 \leq c \leq 5$). However, no such limitation is intended.

In an exemplary embodiment of the present specification, the Li element may be included in an amount of 0.1 to 20 wt% or 0.1 to 10 wt% based on 100 wt% of the total silicon oxide particles. Specifically, the Li element may be included in an amount of 0.5 to 8 wt%, and more specifically, 0.5 to 4 wt%. When the above range is satisfied, the Li compound can be included in an appropriate content in the silicon oxide particles, so the volume change of the negative electrode active material during charging and discharging of the battery can be easily suppressed, and the discharge capacity and initial efficiency of the battery can be improved.

The content of the Mg element or Li element can be confirmed through ICP analysis. For the ICP analysis, a predetermined amount (about 0.01 g) of a negative electrode active material is precisely aliquoted, transferred to a platinum crucible, and completely decomposed on a hot plate by adding nitric acid, hydrofluoric acid and sulfuric acid thereto. Then, by using an inductively coupled plasma atomic emission spectrometer (ICP-AES, Perkin-Elmer 7300), a reference calibration curve is obtained by measuring the intensity of a standard liquid, which has been prepared using a standard solution (5 mg/kg), at an intrinsic wavelength of the Mg element or Li element. Subsequently, a pre-treated sample solution and a blank sample are introduced into the spectrometer, and by measuring the intensity of each component to calculate an actual intensity, calculating the concentration of each component based on the obtained calibration curve, and then performing a conversion such that the sum of the calculated concentrations of the components is equal to a theoretical value, the Mg element or Li element content in the prepared silicon oxide particles can be analyzed.

In an exemplary embodiment of the present specification, a carbon layer may be provided on surfaces and/or in the pores of the silicon oxide particles. Conductivity is imparted to the silicon oxide particles by the carbon layer, so that the initial efficiency, life characteristics, and battery capacity characteristics of a secondary battery including the negative electrode active material including the silicon oxide particles can be improved. A summed amount of the carbon layer may be 5 to 40 wt% based on 100 wt% of the total silicon oxide particles.

In an exemplary embodiment of the present specification, the carbon layer may include at least one of amorphous carbon or crystalline carbon.

The silicon-based active material may have a $D_{90}$ particle diameter of 5 to 15 $\mu$m, a $D_{50}$ particle diameter of 1 to 10 $\mu$m, a $D_{min}$ of 1 to 3 $\mu$m, and a $D_{max}$ of 17 to 23 $\mu$m. A specific surface area of the silicon-based active material may be 3 to

10 m$^2$/g, and specifically, a specific surface area of the silicon oxide may be 6 to 7 m$^2$/g and a specific surface area of the silicon-carbon composite may be 3 to 8 m$^2$/g. In the present specification, the specific surface area is measured by a BET method.

When the above range is satisfied, the structural stability of the active material is ensured during charging and discharging, a problem that the level of volume expansion/contraction increases as the particle diameter becomes excessively large can be prevented, and a problem that the initial efficiency is reduced when the particle diameter is excessively small can also be prevented.

In the present specification, the average particle diameter (D$_{50}$) may be defined as a particle diameter corresponding to 50% of the cumulative volume in the particle diameter distribution curve of particles. The average particle diameter (D$_{50}$) may be measured using, for example, a laser diffraction method. In the laser diffraction method, in general, particle diameters ranging from a submicron region to several millimeters can be measured, and results with high reproducibility and high resolvability can be obtained.

According to an exemplary embodiment, the graphite may include one or more kinds of natural graphite and artificial graphite.

The natural graphite refers to graphite that occurs naturally, and examples thereof include scaled graphite, scaly graphite, or soil graphite. The natural graphite has the advantages of being abundant, being low in price, having high theoretical capacity and compaction density, and being able to realize high output.

In an example, the natural graphite may have a degree of sphericity of 0.9 or greater. According to one example, the natural graphite may be spheroidized natural graphite and have a tap density of 0.9 g/cc or more.

In the present specification, the degree of sphericity may be, when a particle is projected, a value obtained by dividing a circumference of a circle having the same area as a projected image by a circumferential length of the projected image. The degree of sphericity may be obtained from an SEM image, or alternatively, may be measured using a particle shape analyzer, such as Sysmex FPIA3000 available from Malvern. In addition, the crystal size can be confirmed through XRD analysis.

According to an exemplary embodiment of the present invention, the negative electrode composition further includes an aqueous binder and a conductive material.

The binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

The conductive material is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; a conductive fiber such as a carbon fiber and a metal fiber; a conductive tube such as a carbon nanotube; fluorocarbon powder, metal powder such as aluminum powder and nickel powder; a conductive whisker such as zinc oxide and potassium titanate; a conductive metal oxide such as titanium oxide; a conductive material such as a polyphenylene derivative, and the like may be used.

According to an exemplary embodiment, the aqueous binder is included in an amount of 1 to 5 wt%, for example, about 3 to 4 wt% based on the solid content of the negative electrode composition, and the conductive material is included in an amount of 0.1 to 2 wt%, for example, about 1 wt% based on the solid content of the negative electrode composition.

An exemplary embodiment of the present invention provides a negative electrode including the negative electrode composition according to the exemplary embodiments described above.

Specifically, the negative electrode may include a negative electrode current collector and a negative electrode active material layer arranged on at least one surface of the negative electrode current collector. The negative electrode active material layer includes the negative electrode composition according to the exemplary embodiments described above.

The negative electrode active material layer may be formed by applying a negative electrode slurry including the negative electrode composition described above to at least one surface of a negative electrode current collector, and drying and roll-pressing the same.

The negative electrode current collector is not particularly limited as long as it has conductivity without causing a chemical change in the battery. For example, for the current collector, copper, stainless steel, aluminum, nickel, titanium, fired carbon, aluminum or stainless steel each surface-treated with carbon, nickel, titanium, silver, or the like, or the like may be used. Specifically, transition metals that adsorb carbon well, such as copper and nickel, may be used for the current collector. A thickness of the current collector may be 6 μm to 20 μm. However, the thickness of the current collector is not limited thereto.

In particular, when the negative electrode current collector includes Cu, the adhesive force between the active material and the current collector can be further enhanced by active materials having specific contents of N and O in the above-described negative electrode active material layer.

The negative electrode slurry may include a solvent for negative electrode slurry formation. Specifically, the solvent for negative electrode slurry formation may include at least one selected from the group consisting of distilled water, ethanol, methanol, and isopropyl alcohol, and specifically, distilled water, in terms of facilitating dispersion of components.

An exemplary embodiment of the present invention provides a lithium secondary battery including the negative electrode according to the above-described exemplary embodiment, a positive electrode, and a separator.

The positive electrode may include a positive electrode current collector and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector may typically have a thickness of 3 to 500 $\mu$m, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4(0 \leq c1 \leq 0.33)$, $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; a Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.3$); a lithium manganese composite oxide represented by chemical formula $LiMn_{2-c3}M_{c3}O_2$ (where M is at least one selected from the group consisting of Co, Ni, Fe, Cr, Zn, and Ta, and satisfies $0.01 \leq c3 \leq 0.1$) or $Li_2Mn_3MO_8$ (where M is at least one selected from the group consisting of Fe, Co, Ni, Cu, and Zn); $LiMn_2O_4$ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesive force between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

The separator serves to separate the negative electrode and the positive electrode and to provide a migration path of lithium ions, in which any separator may be used as the separator without particular limitation as long as it is typically used in a secondary battery, and particularly, a separator having high moisture-retention ability for an electrolyte solution as well as a low resistance to the movement of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a usual porous non-woven fabric, for example, a non-woven fabric formed of high melting point glass fibers, polyethylene terephthalate fibers, or the like may be used. Furthermore, a coated separator including a ceramic component or polymer material may be used so as to secure heat resistance or mechanical strength, and a separator having a single layer or multilayer structure may be selectively used.

The lithium secondary battery may further include an electrolyte. Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimethoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, such a combined use may be more preferable.

A lithium salt may be used as the metal salt, and the lithium salt is a material that is readily soluble in the non-aqueous electrolyte solution, in which, for example, one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving life characteristics of the battery, suppressing a decrease in battery capacity, improving discharge capacity of the battery, and the like, in addition to the above-described electrolyte components.

Another exemplary embodiment of the present invention provides a battery module including the secondary battery as a unit cell, and a battery pack including the same. Another exemplary embodiment of the present invention, there is provided a battery pack including the secondary battery. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Hereinafter, Examples will be described in detail to specifically describe the present specification. However, the Examples according to the present specification may be modified in other forms, and the scope of the present application is not construed as being limited to the following Examples. The Examples of the present application are provided to more completely explain the present specification to one skilled in the art.

Mode for Invention

## <Example 1>

(1) Method for Preparing Silicon Oxide Containing Magnesium

Si and $SiO_2$ were mixed at a 1:1 molar ratio in crucible no. 1 and heated to a sublimation temperature of 1400°C. In crucible no. 2, magnesium metal was separately heated and evaporated between 600°C and 1000°C. All of the crucibles were depressurized to 0.1 torr. The vaporous mixture containing Mg obtained from crucible no. 1 and crucible no. 2 was reacted for 6 hours, and then condensed to a solid phase in a vacuum region of 800°C. The silicon-based active material prepared by the above method was pulverized for 3 to 4 hours using ball mill equipment to prepare particles with a $D_{50}$ of about 6 $\mu$m. Then, a silicon oxide containing magnesium was prepared by reacting the particles with methane ($CH_4$) by 1 L/min at $10^{-1}$ torr for about 5 hours under an inert gas, Ar atmosphere using a CVD apparatus to form a carbon layer on a surface of the silicon-based active material. The content of Mg in the powder was analyzed by ICP-MS and measured to be 8 wt%.

## (2) Preparation of Negative Electrode

A negative electrode slurry was prepared by mixing a negative electrode active material including the prepared magnesium-containing silicon oxide and artificial graphite at a weight ratio of 10:90; a conductive material including carbon black and SWCNT; and a binder including carboxymethyl cellulose (CMC) and styrene butadiene rubber (SBR) at a weight ratio of 95.3:1:3.6 and adding an appropriate amount of distilled water so that the total solid content was about 46 wt%.

The negative electrode slurry was applied to a Cu metal thin film with a thickness of about 20 μm, which was then dried at a circulating air of 60°C. Then, the thin film was roll-pressed, dried in a vacuum oven of 130°C for about a day, and punched into a circular shape of 1.4875 cm² to prepare a negative electrode.

The summed amount of N and O in the artificial graphite and the magnesium-containing silicon oxide included in Example 1 was analyzed using ONH Analyzer (Bruker, G8 Galileo). The content of N in the artificial graphite was measured to be 76 ppm, and the content of O was measured to be 267 ppm, so the summed amount of N and O was measured to be 343 ppm. The content of N in the magnesium-containing silicon oxide was 910 ppm and the content of O was 29.96%, so the summed amount of N and O was analyzed to be 30 wt%.

**(3) Preparation of Secondary Battery**

A Li metal thin film punched to be 1.7671cm² was used as a positive electrode. A Li coin half-cell was prepared by interposing a porous polyethylene separator between the positive electrode and the negative electrode and injecting an electrolyte solution in which 1M LiPF$_6$ was dissolved in a mixed solution prepared by mixing EMC (ethyl methyl carbonate) and EC (ethylene carbonate) at a mixing ratio of 7:3.

**<Example 2>**

A silicon oxide was prepared in the same manner as in Example 1, except that 75 wt% of the weight of metal magnesium used in Example 1 was used. The content of Mg prepared by the method of Example 2 was measured to be 6 wt%. The silicon oxide containing magnesium prepared in this manner was measured to have a summed amount of N and O of 32 wt%, which is 2 wt% more than that of Example 1. Additionally, in Example 2, artificial graphite was used having a summed amount of N and O of 1986 ppm, which is 1643 ppm more than that in the artificial graphite of Example 1.

In Example 2, a negative electrode and a secondary battery were prepared in the same manner as in Example 1, except for the above-described negative electrode active material.

**<Example 3>**

(1) Preparation of Porous Carbon Particles

A 0.5M sucrose aqueous solution was placed into an autoclave and subjected to a reaction at 180°C for 24 hours to synthesize spherical particles. The carbon-based particles obtained after the reaction were washed with ethanol 3 to 5 times. The carbon-based particles dried at 100°C for 24 hours or longer were mixed with KOH at a ratio of 1:3 by parts by weight, and the mixture was heated at 800°C for 3 hours in a nitrogen atmosphere to expand pores. Then, the resultant was washed with distilled water and dried at 80°C for 12 hours or longer to prepare porous carbon particles.

**(2) Silicon Deposition and Carbon Composite Formation**

A negative electrode active material in the form of silicon deposited on porous carbon particles was prepared by injecting silane gas into a reactor using chemical vapor deposition (CVD) at a flow rate of about 40 to 110 mL/min, and performing processing for about 3 hours under conditions of lower than 800°C with a temperature increase condition of 10 to 15°C/min. Then, a silicon-carbon composite was prepared by reacting the porous carbon particles having silicon deposited thereon with ethylene (C$_2$H$_4$) gas by 1 L/min at 10$^{-1}$ torr and at 700°C for about 5 hours under an inert gas, Ar atmosphere using a CVD apparatus to form a carbon layer on a surface of the silicon active material. The silicon-carbon composite prepared in this manner was analyzed to contain 0.2 wt% of N and 0.5 wt% of O.

A negative electrode and a secondary battery were prepared in the same manner as in Example 1, except that the silicon-carbon composite prepared in Example 3 was used instead of silicon oxide.

**<Example 4>**

A negative electrode active material was prepared in the same manner as in Example 3, except that artificial oxidation was performed after silicon deposition and carbon composite formation. The above oxidation was carried out by creating an atmosphere with less than 10% of O2 in an atmosphere with 90% or more of Ar as a balance gas and performing a reaction at 1,000°C for 3 hours. The degree of oxidation was analyzed to be 1.8 wt% of oxygen in the entire silicon-carbon composite through N/O analysis. By the method of Example 4, the silicon-carbon composite was analyzed to contain 1.5 wt% of N and 1.8 wt% of O.

Additionally, in Example 4, the artificial graphite used in Example 2 was used as artificial graphite.

In Example 4, a negative electrode and a secondary battery were prepared in the same manner as in Example 1, except for the above-described negative electrode active material.

<Comparative Example 1>

A negative electrode active material, a negative electrode, and a secondary battery were prepared in the same manner as in Example 1, except that Mg was not included in Example 1.

The sum of N/O included in each of the graphite and silicon oxide included in Comparative Example 1 was analyzed in the same manner as in Example 1. The summed amount of N and O in the graphite included in Comparative Example 1 was the same as in Example 1, and the summed amount of N and O in the silicon oxide not including magnesium was measured to be 35 wt%, which is 5 wt% more than that of Example 1.

<Comparative Example 2>

A negative electrode active material, a negative electrode, and a secondary battery were prepared in the same manner as in Example 3, except that the temperature for forming a carbon layer on the surface in Example 3 was adjusted to 800°C.

The negative electrode active material prepared by the method was confirmed to have silicon carbide through XRD analysis.

The summed amount of N and O in the silicon-carbon composite prepared by the method of Comparative Example 2 was analyzed to be 0.4 wt%. The graphite included in Comparative Example 2 is identical to the graphite of Example 1.

<Comparative Example 3>

A negative electrode active material, a negative electrode, and a secondary battery were prepared in the same manner as in Comparative Example 2, except that an additional oxidation process was performed after forming a carbon coating layer on the surface in Comparative Example 2.

The negative electrode composition prepared by the method was confirmed to have silicon carbide through XRD analysis.

The silicon-carbon composite prepared by the method of Comparative Example 3 was analyzed to contain 2 wt% of N and 3 wt% of O. The graphite included in Comparative Example 3 is identical to the graphite of Example 1.

<Comparative Example 4>

A negative electrode and a secondary battery were prepared in the same manner as in Example 1, except that 100% artificial graphite was used as the negative electrode active material, without using silicon oxide or silicon-carbon composite, in the negative electrode preparing process.

[Table 1]

| | Summed amount of N and O in graphite (A) (ppm) | Type of silicon-based active material | Summed amount of N and O in silicon-based active material (B) (%) | B/A ratio |
|---|---|---|---|---|
| Example 1 | 343 | Mg-silicon oxide | 30 | 874.64 |
| Example 2 | 1986 | Mg-silicon oxide | 32 | 161.13 |
| Example 3 | 343 | Silicon-carbon composit e | 0.7 | 20.41 |
| Example 4 | 1986 | Silicon-carbon composit e | 3.3 | 16.62 |
| Comparative Example 1 | 343 | Silicon oxide | 35 | 1020.41 |
| Comparative Example 2 | 343 | Silicon-carbon composit | 0.4 | 11.66 |
| | | e | | |
| Comparative Example 3 | 343 | Silicon-carbon composit e | 5 | 145.77 |
| Comparative Example 4 | 343 | - | - | - |

The negative electrode active materials and lithium secondary batteries used in the Examples and Comparative Examples were evaluated as follows, and the results are shown in Table 2 below.

**<Particle Size Analysis>**

The particle size of the negative electrode active material was analyzed by a laser diffraction particle size analysis method using an apparatus available from Malvern.

**<Discharge Capacity, Initial Efficiency, and Capacity Retention Rate>**

The charging and discharging were performed at 0.1C for the first cycle and the second cycle, and the charging and discharging were performed at 0.5C from the third cycle to the 49th cycle. At the 50th cycle, the charging and discharging were terminated in a charge state (with lithium contained in the negative electrode).

Charging conditions: CC (constant current)/CV (constant voltage) (5 mV/0.005 C current cut-off)
Discharging conditions: CC (constant current) condition 1.5V

The discharge capacity (mAh/g) and the initial efficiency (%) were derived from the result after charging and discharging once. Specifically, the initial efficiency (%) was derived by the following calculation.

Initial efficiency (%) = (1st discharge capacity/1st charge capacity) $\times$ 100%

The capacity retention rate was derived by the following calculation.

Capacity retention rate (%) = (49th discharge capacity/1st discharge capacity) $\times$ 100%

**<Slurry Dispersibility Evaluation>**

After mixing the negative electrode active material and distilled water at a weight ratio of 20:80 and performing ultrasonication for 5 minutes, the resultant mixture was left for 10 minutes and was then passed through a mesh having a diameter corresponding to $D_{max}$ of each negative electrode active material. The active material remaining on the mesh was dried in an oven at 80°C for a quarter or longer of a day, and then the weight thereof was measured.
The dispersibility was calculated as follows.

$$dispersibility\,(\%) \;=\; \frac{W_t - W_r}{W_t} \times 100\%$$

$W_t$ refers to a total weight of the negative electrode active material included in the mixture, and
$W_r$ refers to a weight of the negative electrode active material that did not pass through the mesh when the mixture has been passed through the mesh.

**<Adhesive Force Evaluation>**

An adhesive force test was conducted using a 90 Degree Peel Tester apparatus available from IMADA, INC. The analysis method involved attaching an electrode to a slide glass using a double-sided tape. In this case, the entire electrode length was 11 cm. The current collector portion without active material was about 1 cm, and the test was conducted by fixing the corresponding portion to a load cell, measuring the force applied to the load cell until just before the electrode detached, and then calculating an average value at which the force applied to the load cell stabilized.

[Table 2]

| Battery | Discharge capacity (mAh/g) | Initial efficiency (%) | Capacity retention rate (%) | Adhesive force (gf) | Aqueous dispersibi lity (%) |
|---|---|---|---|---|---|
| Example 1 | 503 | 92 | 93 | 57.5 | 88 |
| Example 2 | 500 | 91.8 | 92 | 56.0 | 82 |
| Example 3 | 504 | 92.5 | 91 | 55.4 | 73 |

(continued)

| Battery | Discharge capacity (mAh/g) | Initial efficiency (%) | Capacity retention rate (%) | Adhesive force (gf) | Aqueous dispersibi lity (%) |
|---|---|---|---|---|---|
| Example 4 | 504 | 92.5 | 91 | 55.0 | 72 |
| Comparative Example 1 | 475 | 89 | 90 | 53.3 | 65 |
| Comparative Example 2 | 485 | 90 | 90 | 52.5 | 65 |
| Comparative Example 3 | 480 | 90 | 90 | 52.0 | 67 |
| Comparative | 350 | 93.4 | 93 | 30 | 55 |
| Example 4 | | | | | |

As shown in Table 2 above, the electrodes (Examples 1 to 4) in which the silicon oxide or silicon-carbon composite satisfying the summed amount of N and O of the present invention was mixed with graphite exhibited superior adhesion to the current collector, aqueous dispersibility, and lifespan characteristics compared to the electrode including only graphite (Comparative Example 4) or the electrodes (Comparative Examples 1 to 3) including the silicon oxide or silicon-carbon composite deviating from the range of the summed amount of N and O. Accordingly, the discharge capacity, initial efficiency, and capacity retention rate of the lithium secondary batteries prepared in Examples 1 to 4 were superior to those of Comparative Examples 1 to 4.

**Claims**

1. A negative electrode composition comprising:

a negative electrode active material comprising a silicon-based active material and a carbon-based active material,
wherein a content of the silicon-based active material is more than 0 part by weight and 10 parts by weight or less based on 100 parts by weight of the total negative electrode active material,
wherein the carbon-based active material comprises graphite and has a summed amount of N and O of 200 ppm or more and 2000 ppm or less based on 0.01 g of the graphite, and
wherein the silicon-based active material comprises at least one of a silicon-carbon composite and a silicon oxide, has a summed amount of N and O of 0.7% to 3.3% based on 0.01 g of the silicon-carbon composite, and has a summed amount of N and O of 30% to 32% based on 0.01 g of the silicon oxide.

2. The negative electrode composition of claim **1,** wherein the graphite comprises at least one of natural graphite and artificial graphite.

3. The negative electrode composition of claim 2, wherein the summed amount of N and O in the silicon oxide is 160 to 1,500 times the summed amount of N and O in the graphite.

4. The negative electrode composition of claim 2, wherein the summed amount of N and O in the silicon-carbon composite is 16.5 to 35 times the summed amount of N and O in the graphite.

5. The negative electrode composition of claim 1, wherein the silicon oxide comprises $SiO_x$ ($0<x<2$) and also comprises Mg.

6. The negative electrode composition of claim 5, wherein the Mg is included in an amount of more than 0 wt% and 9 wt% or less based on 100 parts by weight of the silicon oxide.

7. The negative electrode composition of claim 1, wherein the negative electrode composition further comprises an aqueous binder and a conductive material.

8. The negative electrode composition of claim 7, wherein the aqueous binder is included in an amount of 1 to 5 wt% based on a solid content of the negative electrode composition, and the conductive material is included in an amount of 0.1 to 2 wt% based on the solid content of the negative electrode composition.

9. A negative electrode comprising the negative electrode composition of any one of claims 1 to 8.

10. The negative electrode of claim 9, wherein the negative electrode comprises a negative electrode current collector; and a negative electrode active material layer provided on at least one surface of the negative electrode current collector and comprising the negative electrode composition, and the negative electrode current collector comprises Cu.

11. A lithium secondary battery comprising:

the negative electrode of claim 9;
a positive electrode; and
a separator.

12. A battery module comprising the lithium secondary battery of claim 11.

13. A battery pack comprising the lithium secondary battery of claim 11.

14. A battery pack comprising the battery module of claim 12.

## INTERNATIONAL SEARCH REPORT

| | International application No. |
|---|---|
| | **PCT/KR2024/095979** |

**A. CLASSIFICATION OF SUBJECT MATTER**

**H01M 4/36**(2006.01)i; **H01M 4/38**(2006.01)i; **H01M 4/48**(2010.01)i; **H01M 4/587**(2010.01)i; **H01M 4/133**(2010.01)i; **H01M 4/131**(2010.01)i; **H01M 4/134**(2010.01)i; **H01M 4/62**(2006.01)i; **H01M 4/66**(2006.01)i

According to International Patent Classification (IPC) or to both national classification and IPC

**B. FIELDS SEARCHED**

Minimum documentation searched (classification system followed by classification symbols)

H01M 4/36(2006.01); C23C 16/24(2006.01); H01M 4/02(2006.01); H01M 4/38(2006.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극 (anode), 실리콘 (silicon, Si), 흑연 (graphite), N (질소, nitrogen), O (산소, oxygen), 마그네슘 (magnesium, Mg), 접착력 (adhesive strength)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2019-0090730 A (LG CHEM, LTD.) 02 August 2019 (2019-08-02)<br>See abstract; paragraphs [0001], [0020], [0026], [0047], [0048], [0055], [0056], [0059], [0067], [0073] and [0074]; and claims 1-4. | 1-14 |
| Y | JP 2005-235397 A (SANYO ELECTRIC CO., LTD.) 02 September 2005 (2005-09-02)<br>See abstract; paragraphs [0009], [0010] and [0015]; and claims 1, 2, 5 and 6. | 1-14 |
| A | JP 2013-171629 A (BRIDGESTONE CORP.) 02 September 2013 (2013-09-02)<br>See abstract; and claims 1-5. | 1-14 |
| A | JP 2014-075325 A (TEIJIN LTD.) 24 April 2014 (2014-04-24)<br>See abstract; and claims 1-16. | 1-14 |
| A | JP 2016-110969 A (TOSOH CORP.) 20 June 2016 (2016-06-20)<br>See abstract; and claims 1-16. | 1-14 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **21 November 2024** | **21 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2024/095979**

| Patent document cited in search report | | | Publication date (day/month/year) | Patent family member(s) | | | Publication date (day/month/year) |
|---|---|---|---|---|---|---|---|
| KR | 10-2019-0090730 | A | 02 August 2019 | CN | 110892566 | A | 17 March 2020 |
| | | | | CN | 110892566 | B | 19 April 2022 |
| | | | | EP | 3686972 | A1 | 29 July 2020 |
| | | | | EP | 3686972 | B1 | 27 March 2024 |
| | | | | HU | E066212 | T2 | 28 July 2024 |
| | | | | KR | 10-2278633 | B1 | 16 July 2021 |
| | | | | US | 11495794 | B2 | 08 November 2022 |
| | | | | US | 2020-0136137 | A1 | 30 April 2020 |
| | | | | WO | 2019-147083 | A1 | 01 August 2019 |
| JP | 2005-235397 | A | 02 September 2005 | AU | 2708501 | A | 07 August 2001 |
| | | | | WO | 01-56099 | A1 | 02 August 2001 |
| JP | 2013-171629 | A | 02 September 2013 | None | | | |
| JP | 2014-075325 | A | 24 April 2014 | None | | | |
| JP | 2016-110969 | A | 20 June 2016 | CN | 106133956 | A | 16 November 2016 |
| | | | | CN | 106133956 | B | 09 October 2020 |
| | | | | EP | 3131140 | A1 | 15 February 2017 |
| | | | | EP | 3131140 | B1 | 17 June 2020 |
| | | | | JP | 2015-195171 | A | 05 November 2015 |
| | | | | JP | 6617403 | B2 | 11 December 2019 |
| | | | | JP | 6759527 | B2 | 23 September 2020 |
| | | | | KR | 10-2324577 | B1 | 09 November 2021 |
| | | | | TW | 201547090 | A | 16 December 2015 |
| | | | | TW | I644476 | B | 11 December 2018 |
| | | | | US | 10418629 | B2 | 17 September 2019 |
| | | | | US | 2017-0084913 | A1 | 23 March 2017 |
| | | | | WO | 2015-146864 | A1 | 01 October 2015 |

Form PCT/ISA/210 (patent family annex) (July 2022)

**EP 4 625 535 A1**

## REFERENCES CITED IN THE DESCRIPTION

### Patent documents cited in the description

- KR 1020230100955